# EUROPEAN PATENT APPLICATION

(11) **EP 2 863 034 A1**
(43) Date of publication of application: **22.04.2015**
(21) Application number: 14188918.8
(22) Date of filing: 15.10.2014
(51) Int. Cl.: F02C 7/05, B01D 46/00

(54) **Systems and methods for bypassing a coalescer in a gas turbine inlet**

(30) Priority: 15.10.2013 US 201314053969
(71) Applicant: BHA Altair, LLC, Franklin, TN 37067 (US)
(72) Inventor: Jarrier, Etienne Rene, Basingstoke, RG22 6LF (GB); Hatfield, Martin Gregory, Odessa, MO 64076 (US); Kienitz, Paul Michael, Kennesaw, GA 30144 (US)
(74) Representative: Pronovem

(57) **Abstract**

A system including an air intake subsystem having a housing is provided. A coalescer having a frame is disposed inside the housing. The system includes a mounting bracket, and a release mechanism coupled to the frame and the mounting bracket. The release mechanism is adapted to selectively release the frame.

## Description

### TECHNICAL FIELD

The subject matter disclosed herein generally relates to inlet air treatment systems, and more specifically to systems and methods for bypassing panel or pocket coalescers for gas turbine systems.

### BACKGROUND

Gas turbine systems typically include a compressor for compressing incoming air, a combustor for mixing fuel with the compressed air and igniting a fuel and air mixture to form a high temperature gas stream, and a turbine section driven by the high temperature gas stream.

The gas turbine system may be a component in a gas turbine plant such as a power plant for the production of electricity. In some cases the gas turbine system may be used in a combined cycle power plant. In a combined cycle power plant, the gas turbine system generates power and electricity from the combustion of the mixture of fuel and air. The heat energy from this combustion is transmitted to a heat recovery steam generator , which converts the heat into steam. The steam is then communicated to a steam turbine engine where additional power and electricity are produced. The gas turbine plant may include a distributed plant control system.

Some gas turbine systems include inlet air treatment systems that remove moisture and/or particulates and dissolved solids from air channeled to the compressor. Air filtration systems may include pocket or panel coalescers that remove moisture in the air stream, which protects the downstream filters and the turbine. This is essential in environments with high levels of ambient moisture, including humidity, rain, fog and mist. Coalescers also can help to remove liquid phase corrosives, reducing the likelihood of such corrosives reaching the turbine and causing damage. Coalescers remove moisture by agglomerating water droplets, making them larger and heavier, so that they can drain away rather than continue in the airstream.

During normal operating conditions, it is desired to have the inlet air treatment system channel filtered air to the compressor with minimal air disruption and pressure drop through the inlet air treatment system.

Over time, the pressure drop across the coalescers may increase resulting in a decrease in the amount of air flow provided to the compressor. This decrease reduces the operating efficiency of the gas turbine. In some instances, the reduced air flow may cause a compressor surge that may damage the compressor. To prevent compressor surges, in at least some known inlet air treatment systems, coalescers have to be removed manually to be cleaned. This removal process may require shutdown of the gas turbine.

### BRIEF DESCRIPTION OF THE INVENTION

The disclosure provides a solution to the problem of high pressure loss due to clogging of a coalescer in a gas turbine system.

In accordance with one exemplary non-limiting embodiment, the invention relates to a system including an air intake subsystem having a housing and a coalescer that is disposed inside the housing. The system includes a mounting bracket and a release mechanism coupled to the coalescer and the mounting bracket. The release mechanism is adapted to selectively release the frame.

In another embodiment, the invention relates to a gas turbine system comprising a turbine inlet; a compressor coupled to the turbine inlet; a combustor; a turbine; and an air intake subsystem having a housing. The gas turbine system includes a coalescer that is disposed inside the housing and a mounting bracket attached to the housing. A means for coupling the frame to the mounting bracket is provided. The means for coupling is adapted to selectively release the coalescer.

In another embodiment, the invention relates to a gas turbine plant having a turbine inlet; a compressor coupled to the turbine inlet; a combustor; a turbine; a mechanical load; a distributed plant control system that operates at least a portion of the gas turbine plant; and an air intake subsystem having a housing. The gas turbine plant includes a coalescer that is disposed inside the housing and a mounting bracket attached to the housing. The gas turbine plant also includes a release mechanism coupled to the frame and the mounting bracket. The release mechanism is adapted to selectively release the coalescer.

In another embodiment, the invention relates to a gas turbine system comprising: a turbine inlet; a compressor coupled to the turbine inlet; a combustor; a turbine; an air intake subsystem having a housing; a coalescer disposed inside the housing; a mounting bracket attached to the housing; means for coupling the coalescer to the mounting bracket, the means for coupling the coalescer being adapted to selectively release the coalescer. The means for coupling the coalescer is adavantageously adapted to release the coalescer when a pressure differential across the coalescer exceeds a predetermined pressure differential. In preferred embodiments, the means for coupling the coalescer is a detachable spacer; and/or the means for coupling the coalescer comprises a magnet disposed between the coalescer and the mounting bracket; and/or the means for coupling the coalescer comprises an electromagnet, and the system further comprises a controller for controlling the operation of the electromagnet; and/or the system further comprises a filter disposed adjacent to the coalesce; and/or the coalescer is adapted to pivot on one side; and/or the coalescer is advantageously a coalescer selected from among a group comprising a pocket coalescer, a panel coalescer, a tube coalescer, a cartridge coalescer, a sponge, and a screen.

### BRIEF DESCRIPTION OF THE DRAWINGS

Other features and advantages of the present invention will be apparent from the following more detailed description of the preferred embodiment, taken in conjunction with the accompanying drawings which illustrate, by way of example, the principles of certain aspects of the invention.
Figure 1 is a schematic of a gas turbine system.
Figure 2 is a schematic of an inlet system for a gas turbine.
Figure 3 is a cross-sectional view of an embodiment of a coalescer bypass system.
Figure 4 is a cross-sectional view of an embodiment of a release mechanism.
Figure 5 is a cross-sectional view of an embodiment of a magnet release mechanism.
Figure 6 is a cross-sectional view of an embodiment of an electromagnet release mechanism.

### DETAILED DESCRIPTION OF THE INVENTION

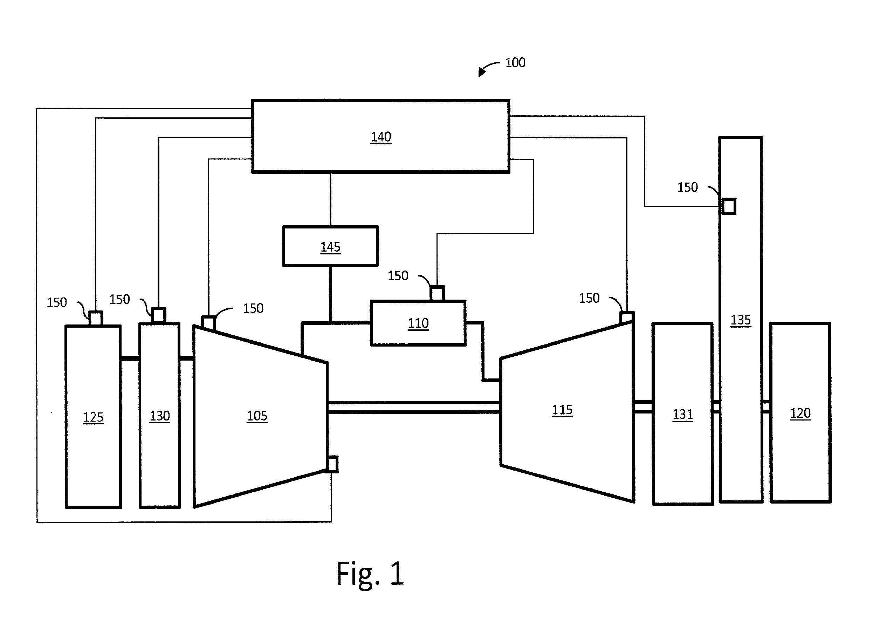

Referring now to the drawings, Figure 1 illustrates a simplified, schematic depiction of one embodiment of a gas turbine system 100. In general, the gas turbine system 100 may include a compressor 105, one or more combustor(s) 110 and a turbine 115 drivingly coupled to the compressor 105. During operation of the gas turbine system 100, the compressor 105 supplies compressed air to the combustor(s) 110. The compressed air is mixed with fuel and then burned within the combustor(s) 110. Hot gases of combustion flow from the combustor(s) 110 to the turbine 115 in order to turn the turbine 115 and generate work, for example, by driving a generator 120.

Additionally, the gas turbine system 100 may include an inlet duct 125 configured to feed ambient air and possibly injected water to the compressor 105. The inlet duct 125 may have ducts, filters, coalescers, screens and/or sound absorbing devices that contribute to a pressure loss of ambient air flowing through the inlet duct 125 and into one or more inlet guide vanes 130 of the compressor 105. The gas turbine system 100 may include a heat recovery steam generator system (HRSG) 131. The HRSG 131 is an energy recovery heat exchanger that recovers heat from a hot gas stream. It produces steam that can be used in an external process integrated with the gas turbine system 100 (cogeneration) or used to drive a steam turbine. Moreover, the gas turbine system 100 may include an exhaust duct 135 configured to direct combustion gases from the outlet of the turbine 115. The exhaust duct 135 may include sound absorbing materials and emission control devices that apply a backpressure to the turbine 115. The amount of inlet pressure loss and back pressure may vary over time due to the addition of components to the inlet duct 125, and exhaust duct 135 and/or due to particulates and dissolved solids and/or dirt clogging the inlet duct 125, and exhaust duct 135.

Moreover, the gas turbine system 100 may also include a controller 140. In general, the controller 140 may comprise any suitable processing unit (e.g., a computer or other computing device) capable of functioning as described herein. For example, in several embodiments, the controller 140 may comprise a General Electric SPEEDTRONIC™ Gas Turbine Control System, such as is described in Rowen, W. I., "SPEEDTRONIC™ Mark V™ Gas Turbine Control System," GE-3658D, published by GE Industrial & Power Systems of Schenectady, N.Y. The controller 140 may generally include one or more processors that execute programs, such as computer readable instructions stored in the controller's memory, to control the operation of the gas turbine system 100 using sensor inputs and instructions from human operators. For example, the programs executed by the controller 140 may include scheduling algorithms for regulating fuel flow to the combustor(s) 110. As another example, the commands generated by the controller 140 may cause actuators on the gas turbine system 100 to, for example, adjust valves between the fuel supply and the combustor(s) 110 that regulate the flow, fuel splits and type of fuel flowing to the combustor(s) 110, adjust the angle of the inlet guide vanes 130 of the compressor 105 and/or to activate other control settings for the gas turbine system 100.

The scheduling algorithms may enable the controller 140 to maintain, for example, the NOx and CO emissions in the turbine exhaust to within certain predefined emission limits, and to maintain the combustor firing temperature to within predefined temperature limits. Thus, it should be appreciated that the scheduling algorithms may utilize various operating parameters as inputs. These parameters may be derived from measurements made by a plurality of sensors 150. The controller 140 may then apply the algorithms to schedule the gas turbine system 100 (e.g., to set desired turbine exhaust temperatures and combustor fuel splits) so as to satisfy performance objectives while complying with operability boundaries of the gas turbine system 100.

Referring still to Figure 1, a fuel control system 145 may be configured to regulate the fuel flowing from a fuel supply to the combustor(s) 110, the split between the fuel flowing into primary and secondary fuel nozzles and/or the amount of fuel mixed with secondary air flowing into the combustion chamber of the combustor(s) 110. The fuel control system 145 may also be adapted to select the type of fuel for the combustor(s) 110. It should be appreciated that the fuel control system 145 may be configured as a separate unit or may comprise a component of the controller 140.

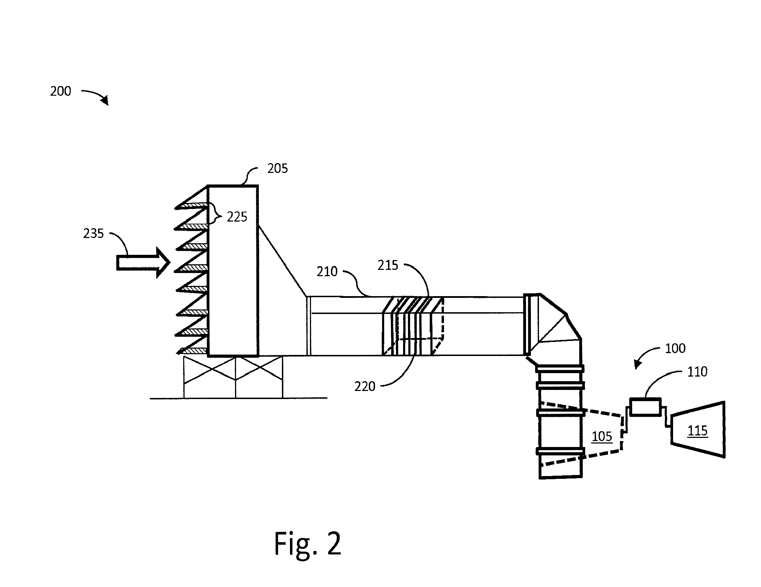

Figure 2 shows an example of a turbine inlet air system 200. The turbine inlet air system 200 may be used with a gas turbine system 100. The turbine inlet air system 200 may include a weather hood 205. The weather hood 205 may be in communication with the gas turbine system 100 via an inlet duct 210. A filter house 215 may be positioned about the inlet duct 210. The filter house 215 may have a number of filters 220 therein. The weather hood 205 also may include a plurality of coalescer assemblies 225. The incoming flow of air 235 passes through the weather hood and the coalescer assemblies 225 and is conveyed by the inlet duct 210 to the compressor 105.

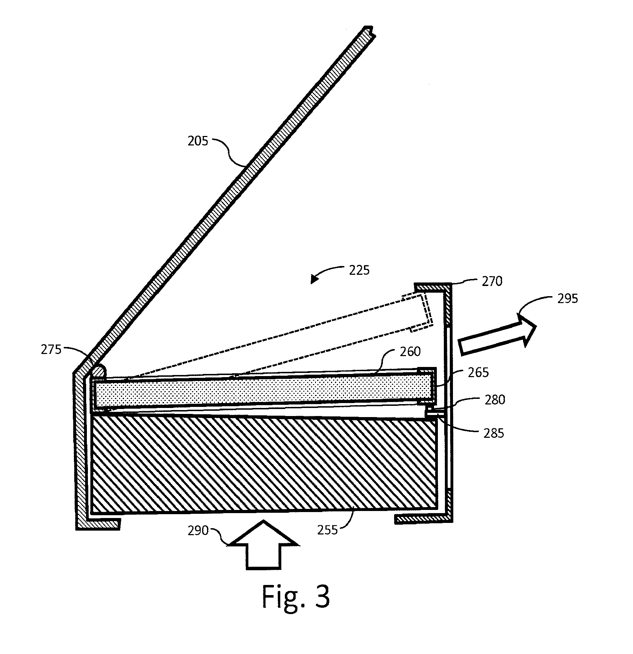

Figure 3 illustrates one of the plurality of coalescer assemblies 225. Each of the plurality of coalescer assemblies 225 may include a moisture separator 255 and a coalescer 260. The moisture separator separates moisture from the stream of air flowing through the coalescer assemblies 225. Additional components such as a filter (not shown) disposed adjacent to the coalescer 260 may be added to the coalescer assemblies 225. The coalescer 260 may be a panel or pocket coalescer having a frame 265. Other types of coalescing materials/forms (tubes, cartridges, sponges, screens, depth media, etc.) may also be used. The weather hood 205 includes a back plate 270. Each of the plurality of coalescer assemblies 225 may include a gasket 275. Each of the plurality of coalescer assemblies 225 also includes a release mechanism 280 coupled to a support bracket 285 that is attached to the back plate 270. The release mechanism 280 is adapted to release the frame 265 when a pressure differential across the coalescer 260 exceeds a predetermined pressure differential. It should be noted that although the coalescer assemblies 225 have been described in association with a hood, other types of housings may be used to support the coalescer assemblies 225.

In operation, when the pressure differential across the coalescer 260 exceeds a predetermined pressure differential, release mechanism 280 releases the frame 265 from the support bracket 285. Upon release of the frame 265 the pressure differential will cause the coalescer 260 to pivot thereby allowing the airflow 290 to bypass the coalescer 260 in a direction denoted by arrow 295.

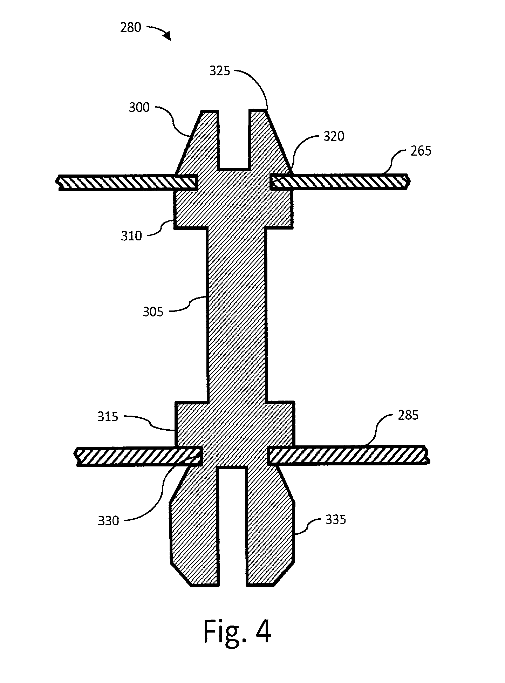

Illustrated in Figure 4 is an embodiment of a release mechanism 280 which comprises a detachable spacer 300. The detachable spacer 300 includes a body section 305 a first flange section 310 and a second flange section 315. The detachable spacer 300 also includes the first notch 320 and a top portion 325. The detachable spacer 300 also includes a second notch 330 and a bulbous bottom portion 335.

During assembly, the top portion 325 is inserted through a hole in the frame 265 of the coalescer 260 until the frame 265 is positioned around the first notch 320. During insertion, top portion 325 deforms to allow the top portion 325 to be inserted through the hole in the frame 265. The bottom portion 335 is inserted through a hole in the support bracket 285 until the support bracket 285 is positioned around the second notch 330 of the detachable spacer 300. During insertion, the bottom portion 335 deforms to allow the bottom portion 335 to be inserted through the hole in the support bracket 285.

In operation, the detachable spacer 300 secures the frame 265 of the coalescer 260 to the support bracket 285. When the pressure differential across the coalescer 260 exceeds a predetermined level, the bottom portion 335 deforms to allow the bottom portion 335 to be detached from the support bracket 285 thereby allowing the coalescer 260 to pivot and the airflow to bypass the coalescer 260.

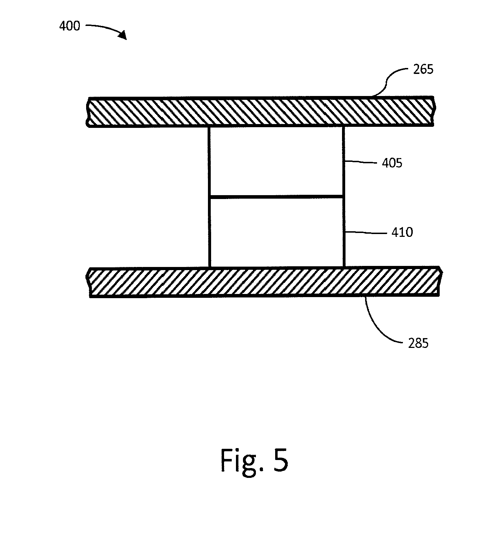

Illustrated in Figure 5 is an embodiment of a release mechanism 280 which comprises a magnet assembly 400. The magnet assembly 400 may include a first magnet 405 secured to the frame 265 and optionally a second magnet 410 secured to the support bracket 285. Although the first magnet 405 and a second magnet 410 are illustrated in Figure 5, it would be apparent to one of ordinary skill in the art that a single magnet (e.g. first magnet 405) may be employed, and the single magnet may be attached to either the frame 265 or the support bracket 285.

In operation, when the pressure differential across the coalescer 260 exceeds a predetermined level sufficient to overcome the attraction forces of the first magnet 405, the first magnet 405 will release. The coalescer 260 will then pivot, thereby allowing the airflow to bypass the coalescer 260.

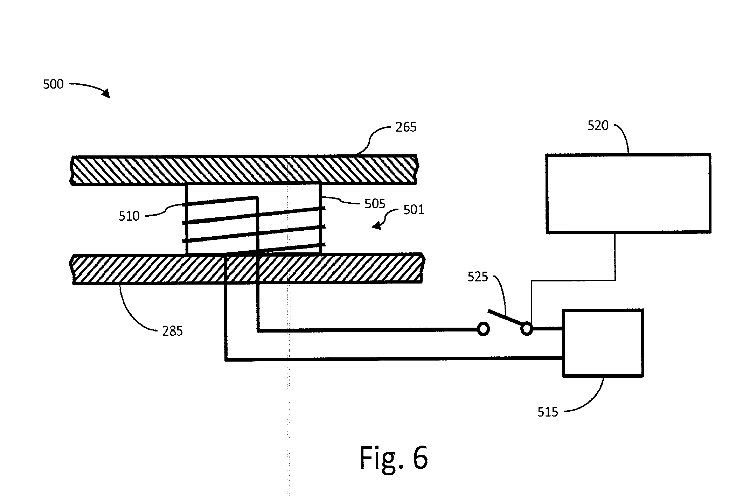

Illustrated in Figure 6 is an embodiment of an electromagnet release mechanism 500 including an electromagnet 501. The electromagnet release mechanism 500 includes a ferromagnetic rod 505 with a coil 510. The coil is coupled to a power source 515 such as a battery. A controller 520 may be provided to control a switch 525 enabling the operator to release the frame 265. The controller 520 provides an operator with additional flexibility to control when the electromagnet release mechanism 500 releases. The controller 520 may cut the power and release the electromagnet 501 at any desired time. The controller 520 may also re-engage the electromagnet circuit thereby providing a positive force which causes the electromagnet 501 to re-engage the frame 265 and close the coalescing panel.

Although three embodiments of the release mechanism 280 have been presented in detail, other release mechanisms 280 are contemplated by the present invention. For example, a fabric hook-and-loop fastener, a detachable or frangible cable or other detachable fasteners may be used.

Where the definition of terms departs from the commonly used meaning of the term, applicant intends to utilize the definitions provided below, unless specifically indicated.

The terminology used herein is for the purpose of describing particular embodiments only and is not intended to be limiting of the invention. Where the definition of terms departs from the commonly used meaning of the term, applicant intends to utilize the definitions provided herein, unless specifically indicated. The singular forms "a", "an" and "the" are intended to include the plural forms as well, unless the context clearly indicates otherwise. It will be understood that, although the terms first, second, etc. may be used to describe various elements, these elements should not be limited by these terms. These terms are only used to distinguish one element from another. The term "and/or" includes any, and all, combinations of one or more of the associated listed items. The phrases "coupled to" and "coupled with" contemplates direct or indirect coupling.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements.

## Claims

1. A system comprising:
an air intake subsystem having a housing;
a coalescer disposed inside the housing;
a mounting bracket connected to the housing;
a release mechanism coupled to the coalescer and the mounting bracket.

2. The system of claim 1, wherein the release mechanism is adapted to release the coalescer when a pressure differential across the coalescer exceeds a predetermined pressure differential.

3. The system of claim 1 or 2, wherein the release mechanism is a detachable spacer.

4. The system of any one of the preceeding claims, wherein the release mechanism comprises a magnet coupled to the coalescer and disposed between the coalescer and the mounting bracket.

5. The system of any one of the preceeding claims, wherein the release mechanism comprises an electromagnet, and the system further comprises a controller for controlling the operation of the electromagnet.

6. The system of any one of the preceeding claims, further comprising a filter disposed adjacent to the coalescer.

7. The system of any one of the preceeding claims, wherein the coalescer is adapted to pivot on one side.

8. The system of any one of the preceeding claims, wherein the coalescer is a coalescer selected from among a group comprising a pocket coalescer, a panel coalescer, a tube coalescer, a cartridge coalescer, a sponge, and a screen.

9. A gas turbine system comprising:
a turbine inlet;
a compressor coupled to the turbine inlet;
a combustor;
a turbine; and
the system of any one of the preceeding claims.

10. A gas turbine plant comprising:
a gas turbine system according to claim 9;
a mechanical load; and
a distributed plant control system that operates at least a portion of the gas turbine plant;
wherein the release mechanism of the system is adapted to selectively release the coalescer of the system.

11. The gas turbine plant of claim 10, further comprising a heat recovery steam generator.

12. The gas turbine plant of claim 10 or 11, further comprising a steam turbine.

13. The gas turbine plant of claim 10, 11 or 12, further comprising an external process integrated with the gas turbine plant.
